# EUROPEAN PATENT APPLICATION

(11) **EP 2 696 460 A1**
(43) Date of publication of application: **12.02.2014**
(21) Application number: 13178133.8
(22) Date of filing: 26.07.2013
(51) Int. Cl.: H02H 1/00, H02H 3/10, H01H 9/00, H01H 9/50

(54) **Switchgear including a circuit breaker having a trip unit with an interface to a number of arc fault sensors**

(30) Priority: 07.08.2012 US 201213568845
(71) Applicant: Eaton Corporation, Cleveland, OH 44122 (US)
(72) Inventor: Benke, James J., Pittsburgh, PA Pennsylvania 15205 (US)
(74) Representative: Schwan - Schwan - Schorer

(57) **Abstract**

Switchgear (2) includes a plurality of bus bars (4); and a plurality of circuit breakers (6). At least one of the circuit breakers includes a trip unit (8). The trip unit includes an interface (10) to at least one arc fault sensor (12) operatively associated with the switchgear. The trip unit is structured to trip at least one of a corresponding one of the at least one of the circuit breakers and a shorting switch (14) responsive to current flowing through the corresponding one of the at least one of the circuit breakers and an arc fault signal (16) from the at least one arc fault sensor.

## Description

### BACKGROUND

### Field

The disclosed concept pertains generally to switchgear including systems for eliminating arcing faults at components of electric power systems. The disclosed concept also pertains to medium voltage switchgear.

### Background Information

Electric power systems incorporate switches for control and protection purposes. Distribution systems, which form part of the overall electric power system, include main and branch power buses and circuit breakers mounted in metal cabinets to form switchgear. Interruption of current flow in the buses of the distribution system by a circuit interrupter creates an arc as the contacts of the circuit interrupter open. These arcs caused by interruption are contained and extinguished in the normal course of operation of the circuit interrupter.

Circuit interrupters, such as circuit breakers, employ an overcurrent trip unit for protecting electrical conductors from damage due to excessive electrical currents. For example, a microprocessor-based overcurrent trip unit employs adjustable tripping characteristics to continuously monitor the electrical current flowing through the circuit breaker and initiate a trip.

Unintended arcing faults can occur within switchgear cabinets, such as between power buses, or between a power bus and a grounded metal component. Such arcing faults can produce high energy gases, which pose a threat to the structure and nearby personnel. This is especially true when maintenance is performed on or about live power circuits. Frequently, a worker inadvertently shorts out the power bus, thereby creating an arcing fault inside the enclosure. The resulting arc blast creates an extreme hazard and could cause injury or even death. This problem is exacerbated by the fact that the enclosure doors are typically open for maintenance.

A common approach to protecting personnel from arcing faults in switchgear has been to design the metal enclosures to withstand the blast from the arcing fault. This has been done at great additional costs due to the heavy gauge metal used and numerous weld joints needed to prevent flying debris. Even with these precautions, the blast from an arcing fault inside the switchgear cannot be contained.

Recently, methods have been developed to minimize the severity of the blast from an internal arcing fault. These methods include pressure sensing and light detection, which sense the arcing fault within the switchgear and cause a circuit breaker to trip before significant damage can result. The pressure sensing method is limited by the insensitivity of the pressure sensors. By the time cabinet pressure has risen to detectable levels, the arcing fault has already caused significant damage.

In a medium voltage system, an internal arcing fault would occur somewhere inside of the switchgear enclosure, frequently, but certainly not limited to the point where the cables servicing the load are connected.

In a low voltage system, such as, for example, a motor control center, an internal arcing fault could occur within the load center panelboard when, for example, servicing line panclboards. A bare live copper bus could inadvertently be shorted. Another example for both low and medium voltage systems would be the shorting of the conductors by rodents, snakes, or other animals or objects.

In the low voltage system, the arcing fault could clear itself, by burning or ejecting the short, but it may take more than one-half cycle to do so, thereby causing significant damage and great risk of injury to workers even in one-half cycle of arcing.

A medium voltage system would behave similar to the low voltage system; however, the medium voltage system would be less likely to be self-extinguishing. The crowbarring of the shorting switch will extinguish the arc. Once the arc is out, and if the short has been burned away or removed, then system power can be restored.

It is known to employ a high-speed shorting switch to eliminate an arcing fault. Known arc elimination devices and systems produce a bolted fault across the power bus (e.g., phase-to-phase, such as two switches for three phases; phase-to-ground, such as three switches for three phases), in order to eliminate the arcing fault and prevent equipment damage and personnel injury due to arc blasts. It is also known to employ various types of crowbar switches for this purpose. The resulting short on the power bus causes an upstream circuit breaker to clear the bolted fault by removing power. See, for example, U.S. Pat. Nos, 6,633,009; and 6,657,150. As a result, system power is lost due to the tripping of the upstream circuit breaker.

A known shorting switch electronic circuit has an option to trip an upstream circuit breaker in addition to a shorting switch by sensing both current flowing though a power bus and an arc flash or arc light associated with an arcing fault of, for example, the power bus.

There is room for improvement in switchgear.

### SUMMARY

These needs and others are met by embodiments of the disclosed concept, which provide an interface to a number of arcing fault sensors as part of a circuit breaker trip unit, along with the capability of the circuit breaker trip unit to trip a shorting switch and/or a corresponding circuit breaker in response to sensed current and the sensed arcing fault from the interface to the number of arcing fault sensors.

In accordance with one aspect of the disclosed concept, switchgear comprises: a plurality of bus bars; and a plurality of circuit breakers, at least one of the circuit breakers comprising: a trip unit, wherein the trip unit comprises an interface to at least one arc fault sensor operatively associated with the switchgear, and wherein the trip unit is structured to trip at least one of a corresponding one of the at least one of the circuit breakers and a shorting switch responsive to current flowing through the corresponding one of the at least one of the circuit breakers and an arc fault signal from the at least one arc fault sensor.

As another aspect of the disclosed concept, switchgear comprises: a plurality of bus bars; a shorting switch structured to short a number of the bus bars to ground or to each other; and a plurality of circuit breakers, at least one of the circuit breakers comprising: a trip unit, the trip unit comprises an interface to at least one arc fault sensor operatively associated with the switchgear, and the trip unit is structured to trip at least one of a corresponding one of the at least one of the circuit breakers and the shorting switch responsive to current flowing through the corresponding one of the at least one of the circuit breakers and an arc fault signal from the at least one arc fault sensor.

As another aspect of the disclosed concept, medium voltage switchgear comprises: a plurality of bus bars; and a plurality of medium voltage circuit breakers, at least one of the medium voltage circuit breakers comprising: a plurality of conductors electrically interconnected with the plurality of bus bars, a plurality of current sensors, each of the current sensors being integral with a corresponding one of the conductors, and a trip unit, the trip unit comprises a first interface to at least one arc fault sensor operatively associated with the medium voltage switchgear and a second interface to the current sensors, and the trip unit is structured to trip at least one of a corresponding one of the at least one of the medium voltage circuit breakers and a shorting switch responsive to current flowing through the conductors and an arc fault signal from the at least one arc fault sensor.

### BRIEF DESCRIPTION OF THE DRAWINGS

A full understanding of the disclosed concept can be gained from the following description of the preferred embodiments when read in conjunction with the accompanying drawings in which:
Figure 1 is a block diagram of switchgear in accordance with embodiments of the disclosed concept.
Figures 2-4 are block diagrams of the switchgear of Figure 1 in accordance with other embodiments of the disclosed concept.
Figure 5 is a simplified isometric view of the switchgear of Figure 1 in accordance with another embodiment of the disclosed concept.
Figures 6-8 are block diagrams of the switchgear of Figure 1 in accordance with other embodiments of the disclosed concept.
Figures 9-11 are simplified isometric views of the switchgear of Figure 1 in accordance with other embodiments of the disclosed concept.
Figure 12 is a block diagram of switchgear including a shorting switch in accordance with other embodiments of the disclosed concept.
Figures 13A and 13B are isometric views of medium voltage switchgear including a shorting switch and integral current sensors in accordance with other embodiments of the disclosed concept.

### DESCRIPTION OF THE PREFERRED EMBODIMENTS

As employed herein, the term "number" shall mean one or an integer greater than one (*i.e*., a plurality).

As employed herein, the term "electrical conductor" shall mean a wire (e.g., solid; stranded; insulated; non-insulated), a copper conductor, an aluminum conductor, a suitable metal conductor, or other suitable material or object that permits an electric current to flow easily.

As employed herein, the term "trip unit" shall have its conventional meaning as employed with a circuit interrupter, such as a low voltage or medium voltage circuit breaker, and shall further mean an external protective relay, an integral protective relay or an integral relay as is conventionally employed with a medium voltage circuit breaker.

As employed herein, the term "circuit breaker" shall have its conventional meaning as applied to a low voltage or medium voltage circuit breaker, and shall further mean a fixed circuit breaker, a fixed mounted circuit breaker, or a drawout circuit breaker.

As employed herein, the term "draw out circuit breaker" shall have its conventional meaning as applied to a low voltage or medium voltage circuit breaker, and shall further mean a withdrawable breaker or withdrawable circuit breaker.

As employed herein, the term "low voltage" shall mean any voltage that is less than about 1000 V_{RMS}.

As employed herein, the term "medium voltage" shall mean any voltage greater than a low voltage and in the range from about 1000 V_{RMS} to about 38 kV_{RMS}.

As employed herein, the statement that two or more parts are "connected" or "coupled" together shall mean that the parts are joined together either directly or joined through one or more intermediate parts. Further, as employed herein, the statement that two or more parts are "attached" shall mean that the parts are joined together directly.

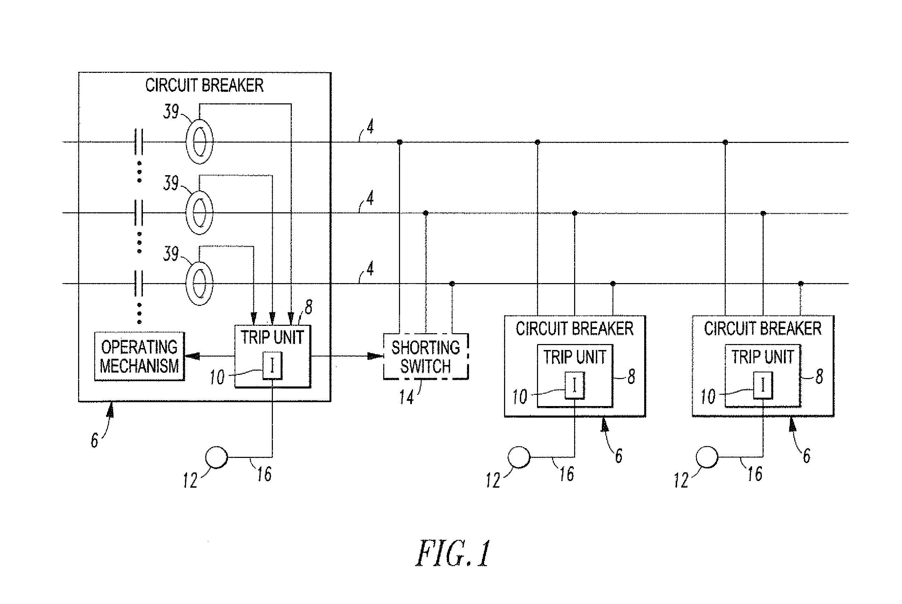

Referring to Figure 1, switchgear 2 includes a plurality of bus bars 4 and a plurality of circuit breakers 6. At least one of the circuit breakers 6 includes a trip unit 8. The trip unit 8 includes an interface (I) 10 to at least one arc fault sensor 12 operatively associated with the switchgear 2. The trip unit 8 trips at least one of a corresponding one of the at least one of the circuit breakers 6 and a shorting switch 14 (shown in phantom line drawing) responsive to current flowing through the corresponding circuit breaker 6 and an arc fault signal 16 from the at least one arc fault sensor 12.

Examples 1-20, below, describe various example configurations corresponding to Figure 1.

### Example 1

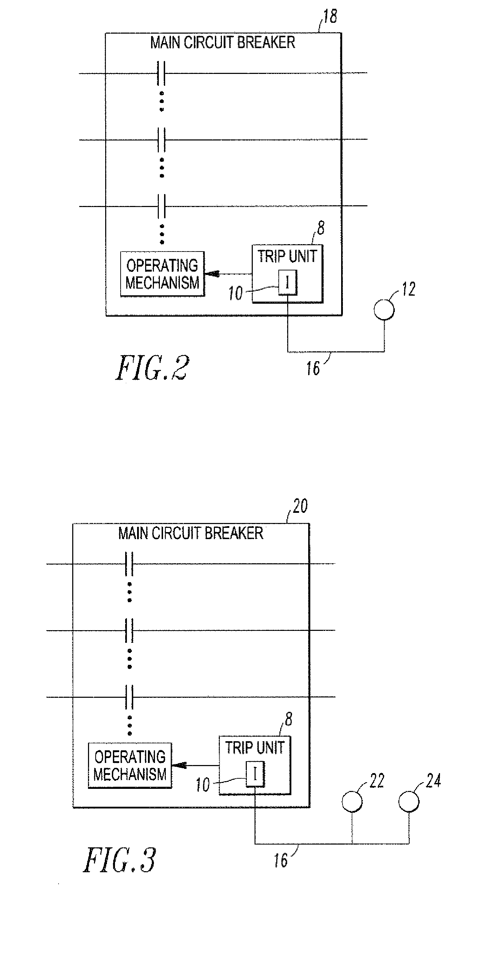

As shown in Figure 2, the at least one of the circuit breakers 6 is one main circuit breaker 18, and the at least one arc fault sensor 12 is connected to the interface (I) 10 of the trip unit 8 of the main circuit breaker 18.

### Example 2

Figure 3 shows that the at least one of the circuit breakers 6 is one main circuit breaker 20, and the at least one arc fault sensor 12 is a plurality of arc fault sensors 22,24 connected to the interface 10 of the trip unit 8 of the one main circuit breaker 20.

### Example 3

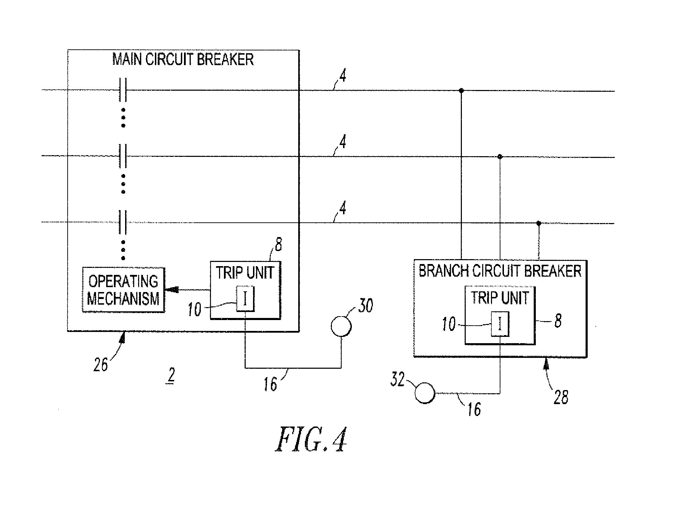

Referring to Figure 4, the at least one of the circuit breakers 6 is one main circuit breaker 26 and at least one branch circuit breaker 28. The at least one arc fault sensor 12 is a plurality of arc fault sensors 30,32. The arc fault sensor 30 is connected to the interface 10 of the trip unit 8 of the one main circuit breaker 26. The arc fault sensor 32 is connected to the interface 10 of the trip unit 8 of the at least one branch circuit breaker 28.

### Example 4

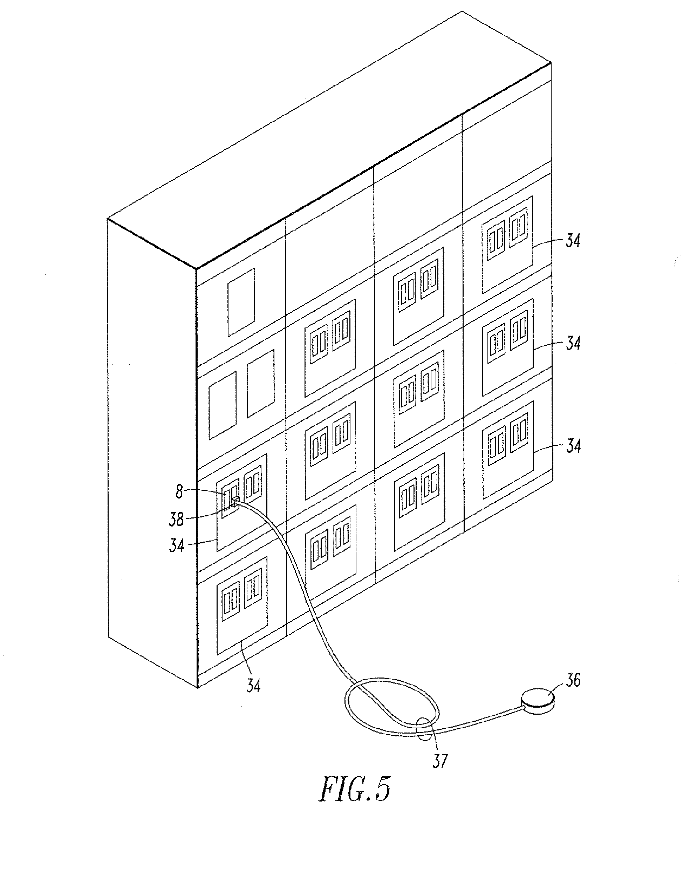

Figure 5 shows that the at least one of the circuit breakers 6 is a number of draw out circuit breakers 34. The at least one arc fault sensor 12 is a number of point sensors 36. Each of the number of point sensors 36 is connected to the interface 10 (shown in Figure 1) of the trip unit 8 (also shown in Figure 1) of a corresponding one of the number of draw out circuit breakers 34 by a secondary harness 38 thereof.

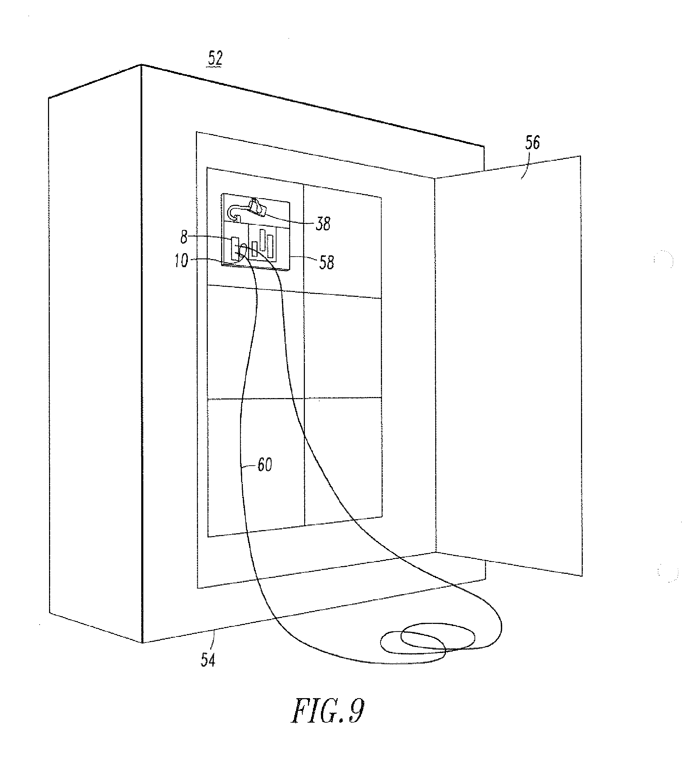

Point sensors, such as 36, are a sensor that just senses one specific point or area of the switchgear 2. The point sensor 36 senses light and then analyzes it to see if it is associated with a bad arc. A point sensor employs a copper conductor 37, which can be electrically connected to the circuit breaker trip unit 8 through a secondary connector (not shown). Secondary connectors are conductors and mounting brackets located on the top of the draw out circuit breaker 34 in the switchgear 2. There is no known way to connect "fiber optic" cables in this manner. A fiber optic cable can only go from one point to another point. In contrast, a point sensor, such as 36, has the ability to connect up to the switchgear 2 and the secondary connectors (not shown) of the draw out circuit breakers 34 by the secondary harness 38 (best shown in Figures 9, 10 and 13A).

### Example 5

The trip unit 8 of Figures 1-5 is mounted within a number of the circuit breakers 6 of the switchgear 2 (Figure 1), in order to provide an integral protective relay that detects an arc and then quickly resolves the issue. This helps to protect both the switchgear 2 and human life.

### Example 6

The integral protective relay provided by the trip unit 8 processes sensor inputs corresponding to current flowing through the corresponding circuit breaker 6, as is conventional through current sensors 39 (Figure 1), and the arc fault signal 16 from the at least one arc fault sensor 12, and decides to trip the circuit breaker 6, the high speed shorting switch 14, or both of the circuit breaker 6 and the shorting switch 14. For example and without limitation, the circuit breaker 6 can close or open in approximately 35 mS, and the high speed shorting switch 14 can operate in approximately 6 mS. For relatively low level arcing issues, tripping the circuit breaker 6 is a good solution, since shut down of the entire switchgear 2 can be avoided. However, for relatively high level arcing issues, substantial arc energy is developed and the example 6 mS time of the high speed shorting switch 14 is fast enough to avoid damage. Hence, there are options for the trip unit 8 to trip the circuit breaker 6 and/or the high speed shorting switch 14.

### Example 7

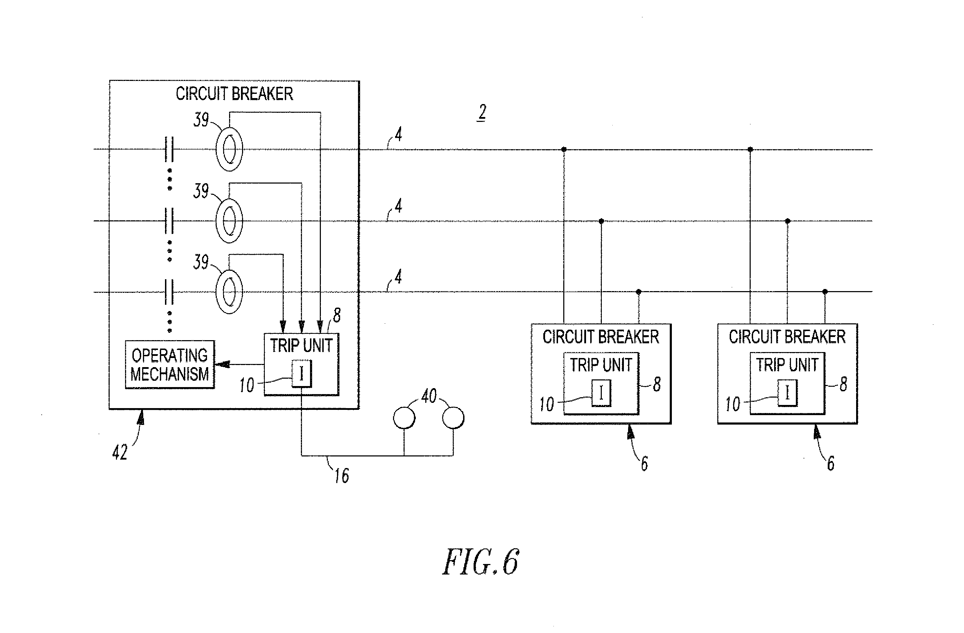

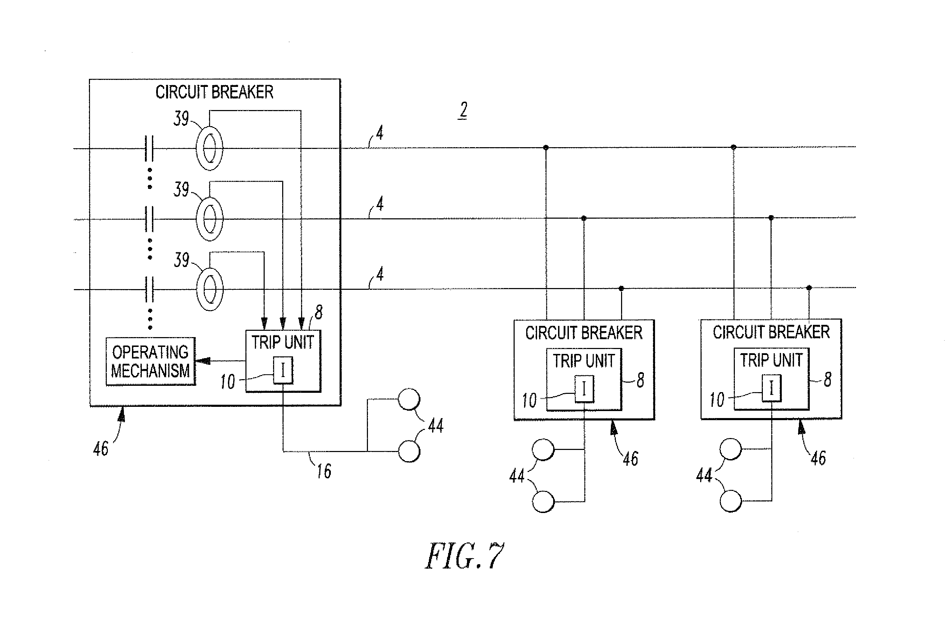

Referring to Figure 6, the integral protective relay provided by the trip unit 8 may have a plurality of arc fault sensors 40 connected to one main circuit breaker 42. Alternatively, as shown in Figure 7, a plurality of arc fault sensors 44 are connected to the trip units 8 of a plurality of circuit breakers 46.

### Example 8

The at least one arc fault sensor 12 of Figure 1 can be a fiber optic sensor connected to the interface 10 of the trip unit 8 of a number of the circuit breakers 6. The arc fault sensor 12 can be a point sensor as was discussed, above, in connection with Example 4, or a fiber optic arc light sensor (hereinafter a "fiber sensor"), which can pull in light for the entire or a substantial length of the fiber. Fiber sensors can be wrapped in, for example and without limitation, ten or more sections.

### Example 9

Referring again to Figure 6, the arc fault sensors 40 for the integral protective relay provided by the trip unit 8 may be a number of point sensors and/or a number of fiber sensors connected to the front of the protective relay. All of these arc fault sensors 40 are connected to the interface 10 of the trip unit 8.

### Example 10

The circuit breakers 6 of Figure 1 can include a circuit breaker being maintained by a maintenance person and/or a main circuit breaker of the switchgear 2.

### Example 11

Further to Example 6, the trip unit 8 can trip only the shorting switch 14 (shown in phantom line drawing in Figure 1) responsive to the current flowing through the corresponding one of the circuit breakers 6 and the arc fault signal 16 from a number of the arc fault sensors 12.

### Example 12

Further to Example 6, the trip unit 8 can trip only the corresponding one of the circuit breakers 6 responsive to the current flowing therethrough and the arc fault signal 16 from a number of the arc fault sensors 12.

### Example 13

Further to Example 6, the trip unit 8 can trip both of the shorting switch 14 (shown in phantom line drawing in Figure 1) and the corresponding one of the circuit breakers 6 responsive to the current flowing therethrough and the arc fault signal 16 from a number of the arc fault sensors 12.

### Example 14

In this example, the switchgear 2 of Figure 1 is low voltage switchgear and the at least one arc fault sensor 12 is a personal protection sensor structured to be mounted to a maintenance person when proximate the switchgear 2. The personal protection sensor 12 is connected to the interface 10 of the trip unit 8.

The personal protection sensor 12 mounts to a maintenance person when proximate (e.g., proximate the front) of the switchgear 2. The maintenance person connects the personal protection sensor 12 to the circuit breaker trip unit 8 corresponding to the circuit breaker 6 being maintained to add safety. Alternatively, the maintenance person connects to the circuit breaker trip unit 8 corresponding to the main circuit breaker 26 of Figure 4. With either connection, the integral protective relay provided by the trip unit 8 is active. Otherwise, during regular, non-maintenance operation, the number of arc fault sensor 12 are not active. The example trip unit 8 handles tripping via the presence of both an arc and current. For an optional fast tripping capability, the high speed shorting switch 14 (shown in phantom line drawing in Figure 1) can operate in 6 mS.

The personal protection sensor 12 can be coupled to a person's clothing (e.g., shirt). This is intended to protect a person who walks into a room for the switchgear 2. For example, the person may step in front of the switchgear 2, work on it, change settings, check features, and check meters. During that whole time they are protected because the personal protection sensor 12 can send the arc fault signal 16 to trip the corresponding circuit breaker 6 and/or trip the high speed shorting switch 14.

### Example 15

In this example, the switchgear 2 of Figure 1 is medium voltage switchgear. This example is similar to Example 14, except that the trip unit 8 is a "circuit breaker integral relay" and the maintenance person connects the personal protection sensor 12 to the circuit breaker integral relay corresponding to the circuit breaker 6 being maintained to add safety.

If the circuit breaker 6 is a low voltage circuit breaker, then the trip unit 8 is a trip unit rather than an integral relay.

For conventional medium voltage circuit breakers, rather than the term "trip unit", the corresponding term is conventionally referred to as an external protective relay or simply a protective relay, which is external to the conventional medium voltage circuit breaker.

For the disclosed trip unit 8, the disclosed concept can employ an external protective relay in addition to the disclosed "integral protective relay" or "integral relay", which is part of the circuit breaker 6 instead of part of the switchgear 2.

For convenience of reference herein, the term "trip unit" is employed in connection with a low voltage circuit breaker, and the term "integral protective relay" is employed in connection with a medium voltage circuit breaker. Otherwise, the disclosed concept can employ substantially the same device, a "trip unit", for a low voltage circuit breaker and an "integral protective relay" for a medium voltage circuit breaker.

### Example 16

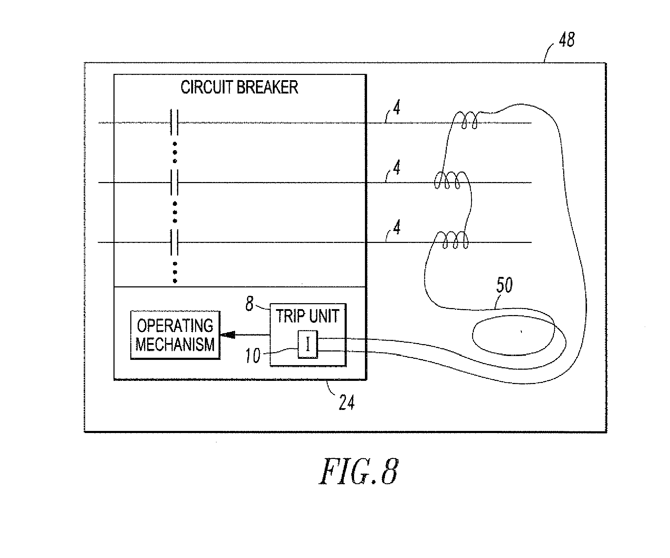

In this example, the switchgear 2 is low voltage switchgear 48 as shown in Figure 8, and the at least one arc fault sensor 12 is a single fiber optic cable 50 routed through the low voltage switchgear 48 and/or proximate the plurality of bus bars 4. When the switchgear 48 is constructed, the single fiber optic cable 50 is routed through the switchgear. The single fiber optic cable 50 can be routed in and out of each location. For example, the fiber sensors disclosed herein are actually fiber optic cables, which can pull in arc light for the entire or a substantially entire length of the fiber. So, for example and without limitation, there can be 6 feet, 12 feet, 20 feet or more of fiber optic cable laid down in ten or more sections of the switchgear 48 (e.g., without limitation, top section; mid-section; bottom section; wiring section; switchgear section) via one relatively long fiber optic cable, which can readily be bent into any suitable space. In this example, the interface 10 includes two fiber optic connections, in order that the fiber optic cable 50 can be tested occasionally by an output light pulse.

Alternatively, the single fiber optic cable 50 is just routed in an area of the switchgear 48 corresponding to the bus bars 4. The fiber optic cable 50 is then routed to the front of a main circuit breaker, such as 24 of Figure 4, for the switchgear 48 and is mounted to the front of the corresponding trip unit 8. The example trip unit 8 handles tripping via the presence of an arc and current. For an optional fast tripping capability, the high speed shorting switch 14 (shown in phantom line drawing in Figure 1) can operate in 6 mS.

### Example 17

In this example, the switchgear 2 of Figure 1 is medium voltage switchgear 52 as shown in Figure 9. The medium voltage switchgear 52 is housed in an enclosure 54 having an external door 56. The medium voltage switchgear 52 includes a main circuit breaker 58 and the at least one arc fault sensor 12 is a single fiber optic cable 60 routed through the external door 56, in order to cover sensing of arcing light external to the switchgear 52, and to the interface 10 of the trip unit 8 of the main circuit breaker 58.

Arcing light is extremely bright and arises from burning plasma or super-heated molten metal. As a result, an arc inside of the srvitchgear 52 (e.g., generally hidden in relatively small sealed areas) can be seen outside of the switchgear 52, in front of the switchgear 52, and in different compartments (not shown) thereof. The arcing light will appear in small openings, behind bolted holes, and through seams of metal doors. The fiber optic cable 60 can be routed inside or outside of the switchgear 52 to provide protection. In most cases, it is routed inside of the switchgear 52 (e.g., a default configuration). However, it can be mounted outside the switchgear 52 in cases where a user upgrades old equipment and does not wish to crawl in the switchgear 52, drill holes, and add a number of arc fault sensors.

In this example, the fiber optic cable 60 is routed "through the door" of the switchgear 52 to the circuit breaker integral relay (trip unit 8) corresponding to the main circuit breaker 58.

Low voltage switchgear, as in Example 16, is traditionally mounted "through the door," which means that a circuit breaker can be seen outside of the switchgear 48 (Figure 8) when standing in front of it. Alternatively, medium voltage switchgear, such as 52, is traditionally "behind the door," which means that there is a solid steel door, such as 56, when looking at the medium voltage switchgear 52. This door 56 must be opened to see the circuit breaker(s), such as 58.

### Example 18

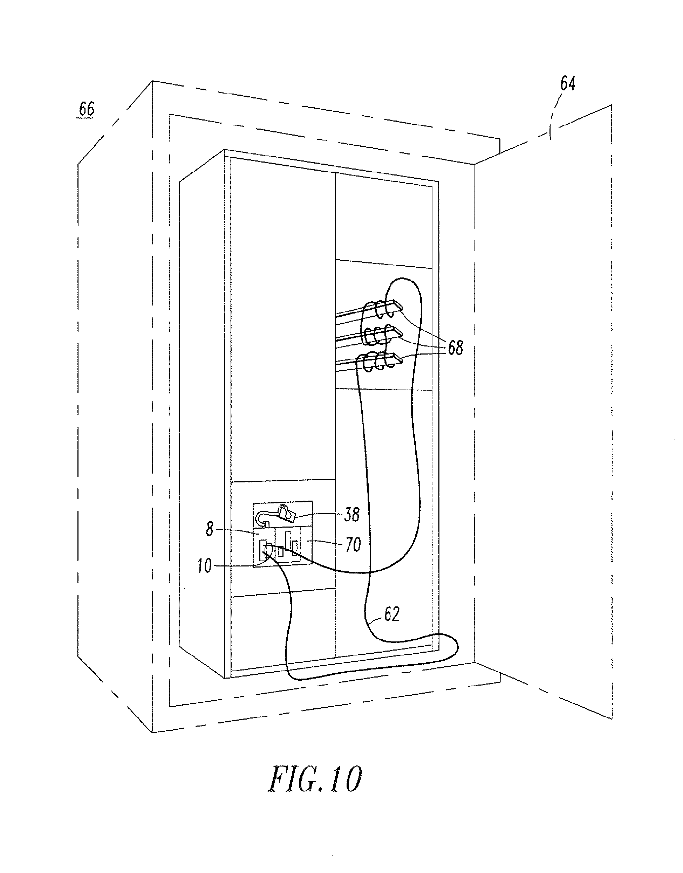

As an alternative to Example 17, as shown in Figure 10, a single fiber optic cable 62 is routed behind an external door 64 and through medium voltage switchgear 66 or proximate a plurality of bus bars 68 to the interface 10 of the trip unit (integral relay) 8 of a corresponding circuit breaker, such as 70, which is a draw out circuit breaker. In this example, the fiber optic cable 62 is disconnected to rack the draw out circuit breaker 70 out of the medium voltage switchgear 66.

This example is somewhat similar to Example 16, except that the switchgear is the medium voltage switchgear 66, the fiber optic cable 62 is routed "behind the door" to the circuit breaker 70, and the fiber optic cable 62 is disconnected to rack the circuit breaker 70 out of the switchgear 66.

### Example_19

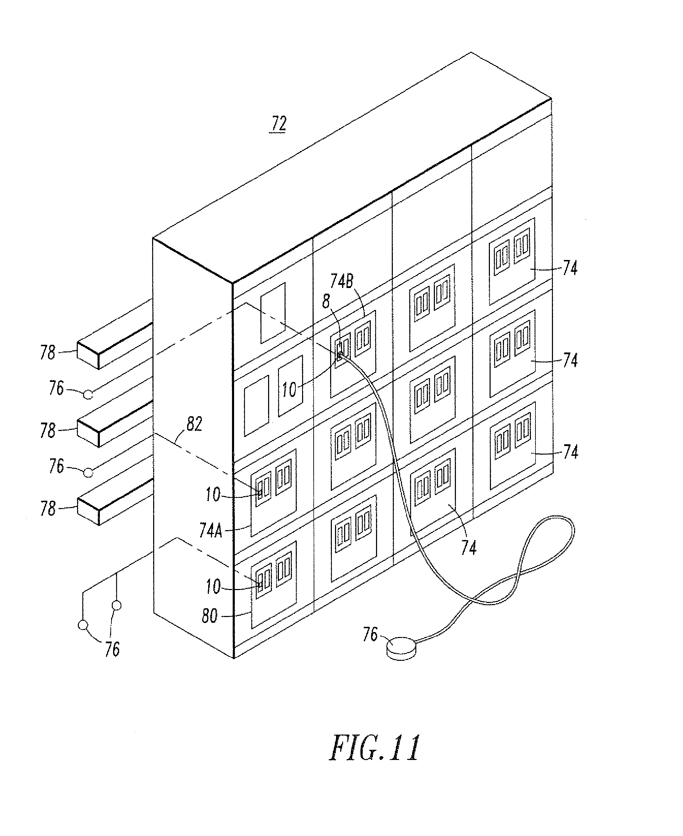

Referring to Figure 11, switchgear 72 can be low voltage switchgear including draw out circuit breakers 74. When the switchgear 72 is constructed, point sensors 76 are routed through the switchgear 72 at a number of desired locations or proximate a plurality of bus bars 78. For example and without limitation, one point sensor 76 can be routed to one circuit breaker 74A, plural point sensors 76 can be routed to one circuit breaker 74B, or plural point sensors 76 can be routed to only to a main circuit breaker 80. The point sensors 76 can be routed via the secondary wiring 82 of the drawout circuit breakers 74; hence, the circuit breakers 74 can be racked in and out without any problem since there is access to the levering in screw (not shown), which pushes the circuit breaker 74 in or out of the switchgear 72, from the outside of the switchgear 72. The example trip unit 8 handles tripping via the presence of an arc and current. For an optional fast tripping capability, the high speed shorting switch 14 (shown in phantom line drawing in Figure 1) can operate in 6 mS.

### Example 20

As an alternative to Example 19, the switchgear 72 can be medium voltage switchgear.

### Example 21

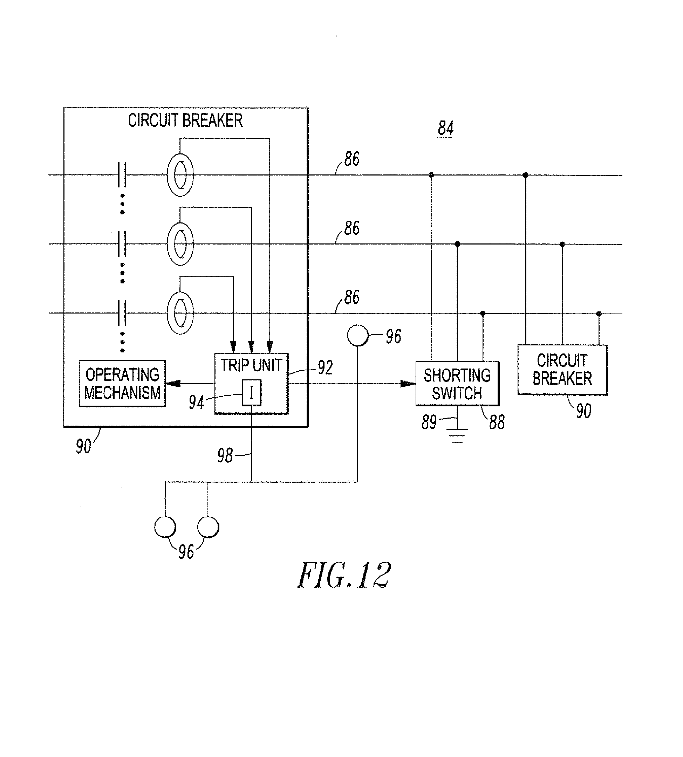

Figure 12 shows switchgear 84 including a plurality of bus bars 86, a shorting switch 88 structured to short a number of the bus bars 86 to ground 89 or to each other, and a plurality of circuit breakers 90. At least one of the circuit breakers 90 includes a trip unit 92. The trip unit 92 includes an interface (I) 94 to at least one arc fault sensor 96 operatively associated with the switchgear 84. The trip unit 92 trips at least one of: (a) a corresponding one of the circuit breakers 90 and (b) the shorting switch 88 responsive to current flowing through the corresponding one of the circuit breakers 90 and an arc fault signal 98 from the at least one arc fault sensor 96.

In this example, the switchgear 84 is low voltage switchgear.

Examples 22-27, below, describe various example configurations corresponding to Figure 12.

### Example 22

Somewhat similar to Example 21, the switchgear 84 can be medium voltage switchgear.

### Example 23

This example is similar to Example 16, except as applied to the switchgear 84 and shorting switch 88 of Figure 12.

### Example 24

This example is similar to Example 17, except as applied to the switchgear 84 and shorting switch 88 of Figure 12.

### Example 25

This example is similar to Example 18, except as applied to the switchgear 84 and shorting switch 88 of Figure 12.

### Example 26

This example is similar to Example 19, except as applied to the switchgear 84 and shorting switch 88 of Figure 12.

### Example 27

This example is similar to Example 20, except as applied to the switchgear 84 and shorting switch 88 of Figure 12.

### Example 28

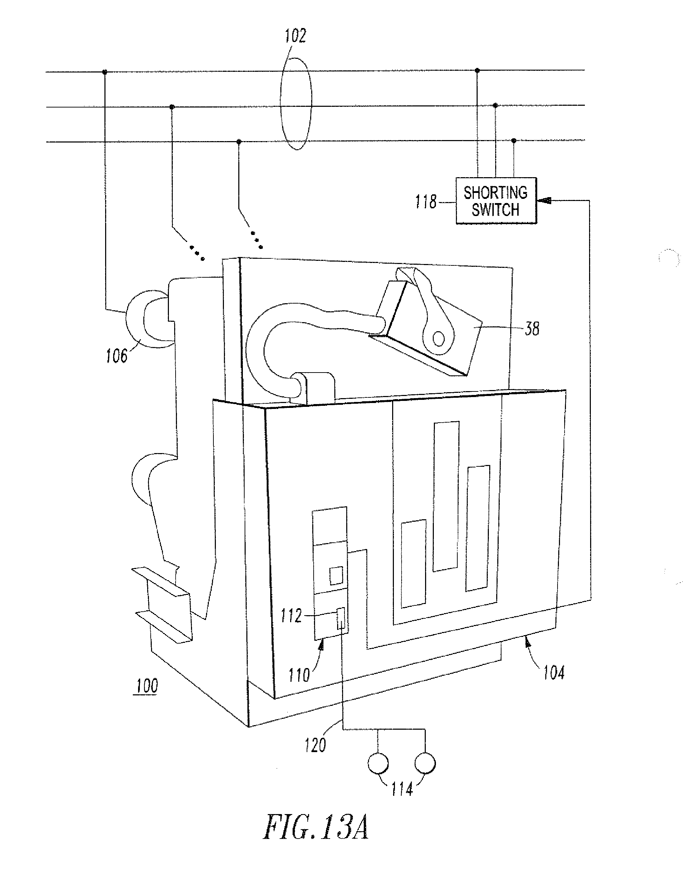

Figures 13A-13B show medium voltage switchgear 100 including a plurality of bus bars 102, and a plurality of medium voltage circuit breakers 104,105. At least one of the medium voltage circuit breakers 104,105 includes a plurality of conductors 106 electrically interconnected with the plurality of bus bars 102, a plurality of current sensors 108 each of which is integral with a corresponding one of the conductors 106, and a trip unit 110 (e.g., without limitation, an integral protective relay). The trip unit 110 includes a first interface 112 to at least one arc fault sensor 114 operatively associated with the medium voltage switchgear 100 and a second interface 116 to the current sensors 108. The trip unit 110 is structured to trip at least one of: (a) a corresponding one of the at least one of the medium voltage circuit breakers 104,105, and (b) a shorting switch 118 responsive to current flowing through the conductors and an arc fault signal 120 from the at least one arc fault sensor 114.

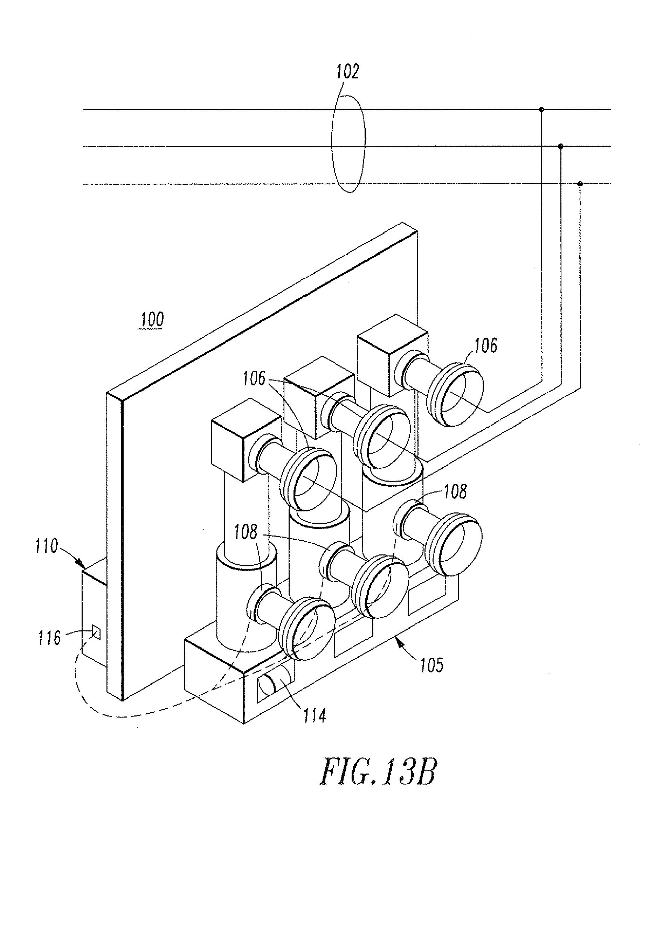

This example is similar to Example 15, except that the trip unit 110 includes integral current sensors 108. As shown in Figure 13B, the arc sensor 114 is integral to the medium voltage circuit breaker 105.

Examples 29 and 30, below, describe various example configurations corresponding to Figures 13A and 13B.

### Example 29

This example is similar to Example 20, except as applied to the switchgear 100 and integral current sensors 108 of Figures 13A and 13B.

### Example 30

This example is similar to Example 17, except as applied to the switchgear 100 and integral current sensors 108 of Figures 13A and 13B.

### Example 31

The disclosed concept employs the circuit breaker trip unit 8 (e.g., without limitation, a low voltage circuit breaker trip unit; a medium voltage circuit breaker protective relay) to provide arc sensing. This provides a relatively very low cost upgrade of a conventional trip unit with the disclosed interface 10 to a fiber optic cable or point sensor. This provides a complete arc protection system, which is much smaller than known arc protection systems. The disclosed concept supports low voltage and medium voltage circuit breakers and switchgear, and a wide range of arc fault sensors.

### Example 32

As employed herein, one arc fault sensor or any suitable plurality of arc sensors can be employed. For example, more than one arc sensor output can be sent to the circuit breaker trip unit 8 of Figure 1 for action. In addition, conventional "collector" units (not shown) can be employed to input multiple arc signals, such as 16, to one collector and then output a single signal, such as 16, to the circuit breaker trip unit interface 10 for action.

### Example 33

The trip unit 8 and the arc sensor interface 10 are integral to the circuit breaker 6 of Figure 1. This reduces or eliminates variability, cost, installation cost, and chances for errors in wiring. Also, factory testing can cover the circuit breaker 6, the current sensors 108 (Figures 13A-13B), the trip unit 8, and the arc fault sensors 12 (Figure 1).

While specific embodiments of the disclosed concept have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the disclosed concept which is to be given the full breadth of the claims appended and any and all equivalents thereof.

## Claims

1. Switchgear (2) comprising:
a plurality of bus bars (4); and
a plurality of circuit breakers (6), at least one of said circuit breakers comprising:
a trip unit (8),
wherein said trip unit comprises an interface (10) to at least one arc fault sensor (12) operatively associated with said switchgear, and
wherein said trip unit is structured to trip at least one of a corresponding one of said at least one of said circuit breakers and a shorting switch (14) responsive to current flowing through said corresponding one of said at least one of said circuit breakers and an arc fault signal (16) from said at least one arc fault sensor.

2. The switchgear (2) of Claim 1 wherein said at least one of said circuit breakers is one main circuit breaker (18;20); and wherein said at least one arc fault sensor: is connected to the interface of the trip unit of said one main circuit breaker (18), or is a plurality of arc fault sensors (22,24) connected to the interface of the trip unit of said one main circuit breaker (20).

3. The switchgear (2) of Claim 1 wherein said at least one of said circuit breakers is one main circuit breaker (26) and at least one branch circuit breaker (28); and wherein said at least one arc fault sensor is a plurality of arc fault sensors (30,32), a first one (30) of said plurality of arc fault sensors being connected to the interface of the trip unit of said one main circuit breaker, and at least a second one (32) of said plurality of arc fault sensors being connected to the interface of the trip unit of said at least one branch circuit breaker.

4. The switchgear (2) of Claim 1 wherein said at least one of said circuit breakers is a number of draw out circuit breakers (34); wherein said at least one arc fault sensor is a number of point sensors (36); and wherein each of the number of point sensors is connected to the interface of the trip unit of a corresponding one of said number of draw out circuit breakers by a secondary harness (38) thereof.

5. The switchgear (2;72) of Claim 4 wherein said switchgear (72) is low voltage switchgear; wherein said number of point sensors is routed through said low voltage switchgear or proximate said plurality of bus bars (78); and wherein said number of point sensors is selected from the group consisting of one point sensor (76) routed to one (74A) of said number of draw out circuit breakers, a plurality of point sensors (76) routed to one (74B) of said number of draw out circuit breakers, and a plurality of point sensors (76) routed to a main circuit breaker (80) of said number of draw out circuit breakers.

6. The switchgear (2) of Claim 4 wherein said switchgear (72) is medium voltage switchgear; wherein said number of point sensors is routed through said medium voltage switchgear or proximate said plurality of bus bars (78); and wherein said number of point sensors is selected from the group consisting of one point sensor (76) routed to one (74A) of said number of draw out circuit breakers, a plurality of point sensors (76) routed to one (74B) of said number of draw out circuit breakers, and a plurality of point sensors (76) routed to a main circuit breaker (80) of said number of draw out circuit breakers.

7. The switchgear (2) of Claim 1 wherein said at least one arc fault sensor is a fiber optic sensor (50) connected to the interface of the trip unit of said at least one of said circuit breakers.

8. The switchgear (2) of Claim 7 wherein said switchgear is medium voltage switchgear (52) comprising an external door (56); wherein said at least one of said circuit breakers comprises a main circuit breaker (58); and wherein said fiber optic sensor is a single fiber optic cable (60) routed through the external door of said medium voltage switchgear to the interface of the trip unit of said main circuit breaker.

9. The switchgear (2) of Claim 7 wherein said switchgear is medium voltage switchgear (66) comprising an external door (64); wherein said fiber optic sensor is a single fiber optic cable (62) routed behind the external door and through said medium voltage switchgear or proximate said plurality of bus bars (68) to the interface of the trip unit of said corresponding one of said at least one of said circuit breakers; wherein said corresponding one of said at least one of said circuit breakers is a draw out circuit breaker (70); and wherein said fiber optic cable is disconnected to rack the draw out circuit breaker out of said medium voltage switchgear.

10. The switchgear (2) of Claim 7 wherein said switchgear is low voltage switchgear (48); and wherein said fiber optic sensor is a single fiber optic cable (50) routed through said low voltage switchgear or proximate said plurality of bus bars (4).

11. The switchgear (2) of Claim 1 wherein said at least one arc fault sensor is at least one point sensor (12) and at least one fiber optic sensor (50); wherein said at least one point sensor is connected to the interface of the trip unit of said at least one of said circuit breakers; and wherein said at least one fiber optic sensor is connected to the interface of the trip unit of said at least one of said circuit breakers.

12. The switchgear (2) of Claim 1 wherein said at least one arc fault sensor is a personal protection sensor (12) structured to be mounted to a maintenance person when proximate said switchgear; and wherein said personal protection sensor is connected to the interface of the trip unit of one of said at least one of said circuit breakers.

13. The switchgear (2) of Claim 1 wherein said trip unit is structured to trip only said shorting switch (14) responsive to the current flowing through said corresponding one of said at least one of said circuit breakers and the arc fault signal from said at least one arc fault sensor.

14. The switchgear (2) of Claim 1 wherein said trip unit is structured to trip only said corresponding one of said at least one of said circuit breakers (6) responsive to the current flowing through said corresponding one of said at least one of said circuit breakers and the arc fault signal from said at least one arc fault sensor.

15. The switchgear (2) of Claim 1 wherein said trip unit is structured to trip both of said shorting switch (14) and said corresponding one of said at least one of said circuit breakers (6) responsive to the current flowing through said corresponding one of said at least one of said circuit breakers and the arc fault signal from said at least one arc fault sensor.
